# EUROPEAN PATENT SPECIFICATION

(11) **EP 2 984 048 B1**
(45) Date of publication and mention of the grant of the patent: **05.09.2018**
(21) Application number: 14718353.7
(22) Date of filing: 02.04.2014
(51) Int. Cl.: C03B 40/00, D03D 15/12, D03D 1/00

(54) **HEAT RESISTANT WOVEN TAPE**
WÄRMEBESTÄNDIGES WEBBAND
RUBAN TISSÉ RÉSISTANT À LA CHALEUR

(30) Priority: 09.04.2013 EP 13162940
(43) Date of publication of application: 17.02.2016
(73) Proprietor: NV Bekaert SA, 8550 Zwevegem (BE)
(72) Inventor: DE RIDDER, Frank, B-9308 Hofstade - Aalst (BE); CLAES, Raf, 85521 Ottobrunn (DE); VERHAEGHE, Tom, B-8540 Vichte (BE); LANCKMANS, Filip, B-1750 Lennik (BE)
(74) Representative: Vangheluwe, Lieven Germain L.
(86) International application number: PCT/EP2014/056600
(87) International publication number: WO 2014/166793

(56) References cited:
- EP-A2- 2 567 945
- DE-A1- 19 736 971
- DE-C1- 3 908 642

## Description

### Technical Field

The invention relates to the field of woven tapes comprising metal fibres that can be used as heat resistant separation material, e.g. in the production of car glass. The heat resistant woven tape can be used to cover tooling, so that the tape is in between the tooling and the hot car glass. The invention also relates to tooling covered by the woven tape and to uses of the woven tape as heat resistant separation material.

### Background Art

The use of various types of heat resistant separation materials is known in car glass manufacturing. Dependent on the application, woven fabrics, knitted fabrics, sleeves, braids... can be used.

Woven tapes made out of 316 or 316L (alloy designation according to ASTM A313) stainless steel fibers are used for more than 20 years as press ring covering in out of furnace press bending in the production of laminated windshields. Such laminated windshields have a glass thickness of about 1 mm to about 2 mm (e.g. 1.2 mm, 1.6 mm, 1.8 mm or 2.1 mm) and the glass layer is laminated to a polyvinyl butyral film. The use temperature of the woven tapes in such application is in the range of 580 to 600°C. In some installations, the woven tapes are supported underneath by a stainless steel needle felt nonwoven fabric.

EP2567945A2 discloses fabrics suited for covering a male mold for the bending of glass, e.g. mirror glass. The fabric comprises weft yarns and warp yarns. The weave between the weft yarns and the warp yarns is a satin weave. The warp yarns and/or the weft yarns comprise stainless steel fibers of discontinuous length. The stainless steel fibers of discontinuous length are incorporated in the yarn by means of a twisting operation. The air permeability of the fabric is between 600 and 1500 liter/(dm²* min.

A specific technology, existing for about 20 years, for making backlites (which have a typical thickness in the range of 3 to 6 mm) is "in furnace bending" in which press rings are used. Important differences exist between "in furnace bending" of backlites and "out of furnace press bending" of laminated windshields; in the first process the product to be bent is much thicker, the shape of the glass to be obtained is in most cases more complex, the bending forces are much higher and the conditions of operation (e.g. temperature) are much more severe. Press rings for "in furnace bending" are positioned in a hot box which is constantly heated at 700 or even 750°C. Sometimes ceramic textile products or special ceramic coatings are applied as covering. However, such coverings suffer from bad abrasion resistance, wherein the abrasion products could pose health and safety problems. Abrasion products - ceramic fibers or ceramic particles - could contaminate the backlites. Damaged ceramic coatings (e.g. because of thermal expansion of the press ring) could result in unacceptable optical quality of the backlites. High maintenance and careful follow up is required of such coverings. Due to all the drawbacks of existing coverings, in most cases no covering is used on these "in furnace bending" press rings. However, frequent maintenance of the press rings is required to ensure proper quality of the backlites.

It is a problem of the prior art - of the existing processes of the use of "in furnace bending" press rings - that the requests for higher (optical) quality of backlites cannot be fulfilled in a decent way. Quality requirements are growing due to a number of new practices, e.g. the use of enamel paint on the backlites makes marking in the backlites more visible; the currently preferred process of gluing backlites to the body frame of the car which makes glass edges more visible; and the trend towards backlites with higher bending radius requiring higher bending forces which increases the risk of marks in the backlites.

### Disclosure of Invention

The primary object of the invention is to provide a heat resistant woven tape that has improved properties compared to the prior art.

According to a first aspect of the invention a woven tape is provided for use as heat resistant separation material. The woven tape comprises
- a first set of yarns in a first direction of the woven tape. The first set of yarns comprises yarns comprising stainless steel fibers. The first set of yarns has a material density, which is the number of yarns per meter of the first set of yarns in the first direction multiplied by their linear density;
- a second set of yarns in the second direction of the woven tape. The second set of yarns comprises yarns comprising fibers out of NiCr alloy or NiCrFe alloy, comprising at least 40% by weight of nickel and at least 14% by weight of chromium. The second set of yarns has a material density which is the number of yarns per meter of the second set of yarns in the second direction multiplied by their linear density.

The weave of the woven tape is a twill weave or a satin weave. The material density of the second set of yarns is higher than the material density of the first set of yarns.

Preferably the material density of the second set of yarns is at least two times, and preferably at least three times, and preferably less than five times, more preferably less than four times, the material density of the first set of yarns.

The woven tape of the invention combines
- a long lifetime when used as heat resistant separation material, even at use temperatures over 700°C, e.g. in the range of 700°C to 800°C,
- ease and reliability of fixing of the woven tape on the tooling, e.g. a press ring, onto which the woven tape is to be used,
- ease of production of the woven tape,
- high optical quality of car glass made with tooling covered with the woven tape.

Surprisingly, the woven tape can be used with excellent results as press ring covering in "in furnace technology" for the production of car glass, e.g. backlites - application in which the furnace temperature is in the range of 700°C to 750°C - resulting in an improved optical quality of the backlites.

A satin weave is preferred, because of the even better optical quality of lites (e.g. backlites, sidelites or sunroof panels) achieved when using a woven tape of the invention that has a satin weave.

The first direction can be the warp direction of the woven tape, which means that the second direction is the weft direction. The woven tape of this embodiment has shown to have superior ease of processing and of fixation onto a press ring. In such embodiment, a preferred weft density ranges from 30 to 60 picks per centimeter. A preferred warp density ranges from 8 to 30 ends per centimeter.

Alternatively, the first direction can be the weft direction, which means that the second direction is the warp direction of the woven tape. In such embodiment, a preferred weft density ranges from 8 to 30 picks per centimeter. A preferred warp density ranges from 30 to 60 ends per centimeter.

The width of the woven tape can e.g. be in the range of 15 to 100 mm, e.g. in the range of 15 to 50 mm, e.g. in the range of 15 to 25 mm, e.g. in the range of 20 to 25 mm.

Preferably, the woven tape does not comprise ceramic fibers. Preferably, the woven tape does not comprise glass fibers. When used as press ring covering in in furnace press bending of backlites, woven tapes without ceramic fibers and without glass fibers result in much better quality backlites. Such woven tapes could also be mounted more easily on the ring.

In preferred embodiments, the first set of yarns comprises yarns comprising stainless steel fibers made out of an austenitic stainless steel alloy, comprising preferably more than 16 % by weight of chromium, and preferably less than 28% by weight of chromium. Preferably, the alloy comprises more than 6% by weight of nickel, more preferably more than 15% by weight of nickel. Preferably, the alloy comprises less than 25 % by weight of nickel.

E.g. stainless steel fibers made out of an alloy of the 300 series of ASTM A313 can be advantageously used for the first set of yarns. Preferred examples are 316, 316L and 347 (according to ASTM A313).

Preferably, the first set of yarns consists out of yarns comprising stainless steel fibers.

Preferably, the first set of yarns comprises or consists out of yarns consisting out of stainless steel fibers.

Preferably, the second set of yarns consists of yarns comprising fibers out of NiCr alloy or NiCrFe alloy, comprising at least 40% by weight of nickel and at least 14% by weight of chromium.

Preferably, the second set of yarns comprises or consists out of yarns consisting out of fibers out of NiCr alloy or NiCrFe alloy, comprising at least 40% by weight of nickel and at least 14% by weight of chromium.

With a NiCr alloy comprising at least 40% by weight of nickel and at least 14% by weight of chromium, is meant an alloy that comprises at least 40% by weight of nickel and at least 14% by weight of chromium.

With a NiCrFe alloy comprising at least 40% by weight of nickel and at least 14% by weight of chromium, is meant an alloy that is comprising at least 40% by weight of nickel, at least 14% by weight of chromium and also iron, preferably at least 5% by weight of iron, more preferably at least 10% by weight of iron.

In preferred embodiments, the second set of yarns comprises yarns comprising fibers out of NiCr alloy or NiCrFe alloy, comprising at least 50% by weight of nickel, more preferably at least 55% by weight of nickel. Preferably, such alloy comprises less than 70% by weight of nickel. Preferably, the alloy comprises at least 20% by weight of chromium. Preferably, the alloy comprises less than 30% by weight of chromium, more preferably less than 25% by weight of chromium.

An example of a suitable alloy for the fibers for the second set of yarns is UNSN06601, and/or its equivalent designation 2.4851 according EN10088-1:2005. This alloy has a nickel content of between 58 and 63 % by weight and a chromium content of between 21.0 and 25.0 % by weight.

Another example of a suitable alloy for the fibers for the second set of yarns comprises more than 50 % by weight of nickel (e.g. between 50 and 57 % by weight, e.g. between 53 and 56 % by weight), about 23 % by weight of chromium, about 16 % by weight of molybdenum, at maximum 3% by weight of iron, about 1.6 % by weight of cupper, at maximum 0.08 % by weight of silicon and at maximum 0.01 % by weight of carbon. An example of this alloy is commercially available as Hastelloy C2000.

Another example of a suitable alloy for the fibers for the second set of yarns comprises between 44 and 56 % by weight of nickel, between 20 and 24 % by weight of chromium, about 3 % by weight of iron, between 8 and 10 % by weight of molybdenum and between 10 to 15 % by weight of cobalt. An example of this alloy is commercially available as Inconel 617.

The woven tape can comprise sets of two consecutive weft yarns that are woven in the woven tape in the same way, meaning that they cross with the warp yarns in the same way.

Preferably the equivalent diameter of the fibers in the first set of yarns and/or of the fibers in the second set of yarns is larger than 4 µm, preferably larger than 6 µm.

Preferably, the equivalent diameter of the fibers in the first set of yarns and/or of the fibers in the second set of yarns is smaller than 25 µm, preferably smaller than 20 µm, more preferably smaller than 15 µm. Examples of equivalent fiber diameters that can advantageously be used are 6.5 µm, 8 µm, 12 µm and 22 µm.

With equivalent diameter is meant the diameter of a circle that has the same surface area as the surface area of the cross section of a fiber, which is not necessarily having a circular cross section.

Preferred satin weaves have a repeat with 5 or with 8 warp yarns. The latter is preferred for improved optical quality of the car glass produced using such woven tape.

In an embodiment of the invention, the yarns in the first set of yarns are spun yarns comprising staple fibers, preferably the spun yarns are plied yarns, more preferably two-ply or three-ply yarns.

In an embodiment of the invention, the yarns in the second set of yarns are spun yarns comprising staple fibers, preferably the spun yarns are plied yarns, more preferably two-ply or three-ply yarns.

Preferred yarn counts for the yarns of the first set of yarns and/or for the yarns of the second set of yarns are in the range of 250 tex to 100 tex (4 Nm to 10 Nm). Two ply and three ply yarns are preferred. Examples are 105*2 tex (9.5/2 Nm), 90*2 tex (11/2 Nm), 70*2 tex (14/2 Nm), 67*2 tex (15/2 Nm), 67*3 tex (15/3 Nm) and 50*2 tex (20/2 Nm).

Preferably, the twist of the yarns in the first set of yarns and/or the twist of the yarns in the second set of yarns is within the range of 75 to 300 turns per meter.

The metal alloy staple fiber yarns used for the first set of yarns and/or for the second set of yarns can e.g. be produced according to the bundle drawing process, followed by stretch breaking and spinning into a yarn. A bundle drawing process to produce metal fibers is e.g. described in US-A-2050298, US-A-3277564 and in US-A-3394213. Alternatively the staple fibers can be obtained starting from single end drawn metal filaments.

In embodiments of the invention, the yarns in the first set of yarns and/or the yarns in the second set of yarns can be yarns comprising continuous filaments, e.g. twisted or plied continuous filament yarns. The continuous filaments can be produced e.g. via the bundle drawing process or via single end drawing.

Preferably the woven tape has a thickness lower than the thickness of the woven tape after weaving. The thickness of the woven tape can have been reduced by means of compressive forces, e.g. the woven tape has been calendared. The thickness of the woven tape has e.g. been reduced with at least 40% by calendaring. Such woven tapes have shown to offer further improved optical quality of the car glass. By observing the woven tape, the skilled person can without any doubt see whether or not the thickness of the woven tape is lower than the thickness of the woven tape after weaving.

A second aspect of the invention is a covered press ring, e.g. for use in in furnace bending, wherein the press ring is covered with a woven tape as in the first aspect of the invention. The woven tape can be attached to the press ring in a number of different ways. Examples are via welding, e.g. via spot welding, and via sewing, e.g. using stainless steel wires or stainless steel yarn as sewing threads.

Preferably, the face of the woven tape that predominantly shows yarns of the second set of yarns is positioned away from the press ring, so that in use this face will contact the glass that is being bent.

Preferably, the surface of the woven tape is in contact with the surface of the press ring. In an alternative preferred embodiment, a nonwoven metal fiber felt is positioned between the woven tape and the press ring.

A third aspect of the invention is the use of the woven tape of the first aspect of the invention, or of the covered press rings of the second aspect of the invention, in processes where the use temperature is higher than 700°C, e.g. higher than 750°C. Preferably, the face of the woven tape that predominantly shows yarns of the second set of yarns contacts the hot glass.

A preferred use is in "in furnace bending" of glass, e.g. of car glass, e.g. of backlites, sidelites or sunroof panels.

Another preferred use is in out of furnace bending, e.g. of laminated windshields.

### Brief Description of Figures in the Drawings

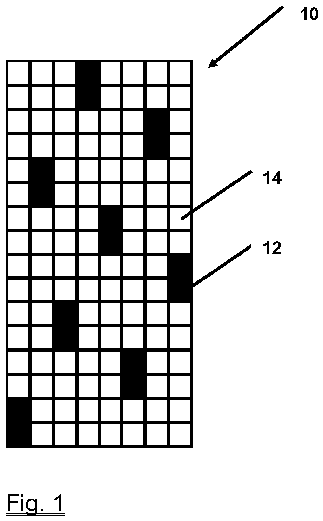

Figure 1 shows an example of a repeat pattern of a weave of a woven tape according to the invention.

### Mode(s) for Carrying Out the Invention

An example of a woven tape according of the invention has:
- in warp direction two-ply spun yarns (Nm 11/2 which is 182 tex) of bundle drawn 12 µm equivalent diameter stretch broken metal fibers of alloy 316L (according to ASTM A313). This is the first set of yarns.
- in weft direction two-ply spun yarns (Nm 11/2, which is 182 tex) of bundle drawn 12 µm equivalent diameter stretch broken metal fibers of alloy 2.4851 according to EN10088-1:2005 (equivalent to UNSN06601). This is the second set of yarns. This alloy has a nickel content of between 58 and 63 % by weight and a chromium content of between 21.0 and 25.0 % by weight;
- a weft density of 60 picks per centimeter;
- a warp density of 16 ends per centimeter;
- a satin 8 V5 weave with double pick insertion was used. Figure 1 shows the repeat pattern 10 of this weave: as is the convention for representing repeat patterns of weaves, the horizontal direction is the weft direction and the vertical direction is the warp direction. A black square (12) indicates that a warp yarn runs over the weft yarn and a white square (14) indicates that a weft yarn runs over a warp yarn;
- a weight of 1500 gram per square meter;
- after weaving the fabric has a thickness (gauge) of 1.1 mm. The woven tape has been calendared, after calendaring it has a thickness of 0.6 mm. A tape of 45 mm width was made, but tapes of other widths can be provided in the same manner.

The material density of the second set of yarns (the weft yarns in the example) is 0.109 g/m² and the material density of the first set of yarns (the warp yarns of the example) is 0.029 g/m², meaning that the material density of the second set of yarns is 3.75 times the material density of the first set of yarns.

Lab trials demonstrated that bending of a hot glass panel could be performed with a press ring covered with the woven tape of the invention resulting in glass panels with high optical quality and with good lifetime and performance over lifetime, even in furnace temperatures over 700°C.

## Claims

1. A woven tape for use as heat resistant separation material, comprising
- a first set of yarns in a first direction of the woven tape; said first set of yarns comprises yarns comprising stainless steel fibers, and said first set of yarns has a material density, which is the number of yarns per meter of said first set of yarns in said first direction multiplied by their linear density;
- a second set of yarns in the second direction of the woven tape; and said second set of yarns has a material density which is the number of yarns per meter of said second set of yarns in said second direction multiplied by their linear density;
wherein the weave of said woven tape is a twill weave or a satin weave; and wherein the material density of said second set of yarns is higher than the material density of said first set of yarns;
**characterized in that** said second set of yarns comprises yarns comprising fibers out of NiCr alloy or NiCrFe alloy, comprising at least 40% by weight of nickel and at least 14% by weight of chromium.

2. The woven tape as in claim 1, wherein said first direction is the warp direction of the woven tape.

3. The woven tape as in claim 1, wherein said first direction is the weft direction of the woven tape.

4. The woven tape as in any of the preceding claims, wherein the yarns in said first set of yarns are spun yarns comprising staple fibers.

5. The woven tape as in any of the preceding claims, wherein the yarns in said second set of yarns are spun yarns comprising staple fibers.

6. The woven tape as in any of the preceding claims, wherein the yarns in said first set of yarns and/or the yarns in said second set of yarns are yarns comprising continuous filaments.

7. A covered press ring for use in in furnace bending, wherein the press ring is covered with a woven tape as in claims 1 to 6.

8. The covered press ring as in claim 7, wherein the surface of said woven tape is in contact with the surface of said press ring.

9. The covered press ring as in claims 7 to 8, wherein the face of the woven tape that predominantly shows yarns of said second set of yarns is positioned away from the press ring, so that in use said face will contact the glass that is being bent.

10. Use of the woven tape of claims 1 to 6, or of the covered press rings of claims 7 to 9, wherein the use temperature is higher than 700°C.

11. Use as in claim 10, wherein the use is in "in furnace bending" of glass.

12. Use of the woven tape of claims 1 to 6, or of the press rings of claims 7 to 9, in out of furnace bending, e.g. of laminated windshields.

13. Use as in claims 10 to 12, wherein the face of the woven tape that predominantly shows yarns of said second set of yarns contacts the hot glass.

## Patentansprüche

1. Webband zur Anwendung als wärmebeständiges Trennmaterial, das Folgendes umfasst:
- einen ersten Garnsatz in einer ersten Richtung des Webbands; der erste Garnsatz umfasst Garne, die rostfreie Stahlfasern aufweisen, und der erste Garnsatz hat eine Materialdichte, welche die Anzahl der Garne pro Meter des ersten Garnsatzes in der ersten Richtung, multipliziert mit ihrer linearen Dichte, darstellt;
- einen zweiten Garnsatz in der zweiten Richtung des Webbands; und der zweite Garnsatz hat eine Materialdichte, welche die Anzahl von Garnen pro Meter des zweiten Garnsatzes in der zweiten Richtung, multipliziert mit ihrer linearen Dichte, darstellt;
wobei die Webebindung des Webbands eine Köperbindung oder eine Satinbindung ist; und wobei die Materialdichte des zweiten Garnsatzes höher ist als die Materialdichte des ersten Garnsatzes; **dadurch gekennzeichnet, dass** der zweite Garnsatz Garne umfasst, die Fasern aus NiCr-Legierung oder NiCrFe-Legierung umfassen, die mindestens 40 Gewichts-% Nickel und mindestens 14 Gewichts-% Chrom umfassen.

2. Webband nach Anspruch 1, wobei die erste Richtung die Kettrichtung des Webbands ist.

3. Webband nach Anspruch 1, wobei die erste Richtung die Schussrichtung des Webbands ist.

4. Webband nach einem der vorhergehenden Ansprüche, wobei die Garne im ersten Garnsatz gesponnene Garne sind, die Stapelfasern umfassen.

5. Webband wie in einem der vorhergehenden Ansprüche, wobei die Garne im zweiten Garnsatz gesponnene Garne sind, die Stapelfasern umfassen.

6. Webband nach einem der vorhergehenden Ansprüche, wobei die Garne im ersten Garnsatz und/oder die Garne im zweiten Garnsatz Garne sind, die kontinuierliche Filamente umfassen.

7. Abgedeckter Pressring zur Anwendung bei Ofenbiegen, wobei der Pressring mit einem Webband nach Ansprüchen 1 bis 6 abgedeckt ist.

8. Abgedeckter Pressring nach Anspruch 7, wobei die Oberfläche des Webbands in Kontakt mit der Oberfläche des Pressrings steht.

9. Abgedeckter Pressring nach Ansprüchen 7 bis 8, wobei die Oberfläche des Webbands, die vorwiegend Garne des zweiten Garnsatzes zeigt, vom Pressring weg positioniert ist, sodass die Oberfläche bei Anwendung das Glas kontaktiert, das gebogen wird.

10. Anwendung des Webbands nach Ansprüchen 1 bis 6 oder der abgedeckten Pressringe nach Ansprüchen 7 bis 9, wobei die Anwendungstemperatur über 700 °C ist.

11. Anwendung nach Anspruch 10, wobei die Anwendung bei "Biegen im Ofen" von Glas erfolgt.

12. Anwendung des Webbands nach Ansprüchen 1 bis 6 oder der Pressringe nach Ansprüchen 7 bis 9 bei Biegen außerhalb des Ofens, z. B. von laminierten Windscheiben.

13. Anwendung nach Ansprüchen 10 bis 12, wobei die Oberseite des Webbands, die vorwiegend Garne des zweiten Garnsatzes zeigt, das heiße Glas kontaktiert.

## Revendications

1. Bande tissée destinée à une utilisation comme matériau de séparation thermorésistant, comprenant :
- un premier ensemble de fils dans une première direction de la bande tissée ; ledit premier ensemble de fils comprenant des fils comprenant des fibres d'acier inoxydable, et ledit premier ensemble de fils ayant une densité de matériau, qui est le nombre de fils par mètre dudit premier ensemble de fils dans ladite première direction multiplié par leur densité linéaire ;
- un deuxième ensemble de fils dans la deuxième direction de la bande tissée ; ledit deuxième ensemble de fils ayant une densité de matériau qui est le nombre de fils par mètre dudit deuxième ensemble de fils dans ladite deuxième direction multipliée par leur densité linéaire ;
dans laquelle l'armure de ladite bande tissée est une armure sergé ou une armure satin ; et
dans laquelle la densité de matériau dudit deuxième ensemble de fils est supérieure à la densité de matériau dudit premier ensemble de fils ;
**caractérisée en ce que** ledit deuxième ensemble de fils comprend des fils comprenant des fibres d'alliage NiCr ou d'alliage NiCrFe, comprenant au moins 40 % en poids de nickel et au moins 14 % en poids de chrome.

2. Bande tissée selon la revendication 1, dans laquelle ladite première direction est la direction de chaîne de la bande tissée.

3. Bande tissée selon la revendication 1, dans laquelle ladite première direction est la direction de trame de la bande tissée.

4. Bande tissée selon l'une quelconque des revendications précédentes, dans laquelle les fils dans ledit premier ensemble de fils sont des filés comprenant des fibres discontinues.

5. Bande tissée selon l'une quelconque des revendications précédentes, dans laquelle les fils dans ledit deuxième ensemble de fils sont des filés comprenant des fibres discontinues.

6. Bande tissée selon l'une quelconque des revendications précédentes, dans laquelle les fils dans ledit premier ensemble de fils et/ou les fils dans ledit deuxième ensemble de fils sont des fils comprenant des filaments continus.

7. Couronne de pressage couverte destinée à une utilisation dans des procédés de bombage au four, la couronne de pressage étant recouverte d'une bande tissée selon les revendications 1 à 6.

8. Couronne de pressage couverte selon la revendication 7, dans laquelle la surface de ladite bande tissée est en contact avec la surface de ladite couronne de pressage.

9. Couronne de pressage couverte selon les revendications 7 à 8, dans laquelle la face de la bande tissée sur laquelle on voit principalement des fils dudit deuxième ensemble de fils est positionnée à l'opposé de la couronne de pressage, de telle sorte qu'en cours d'utilisation ladite face entre en contact avec le verre qui est en cours de bombage.

10. Utilisation de la bande tissée selon les revendications 1 à 6, ou des couronnes de pressage couvertes selon les revendications 7 à 9, la température en cours d'utilisation étant supérieure à 700 °C.

11. Utilisation selon la revendication 10, l'utilisation étant dans des procédés de « bombage au four » du verre.

12. Utilisation de la bande tissée selon les revendications 1 à 6, ou des couronnes de pressage selon les revendications 7 à 9, dans des procédés de bombage en dehors de fours, par exemple de pare-brise feuilletés.

13. Utilisation selon les revendications 10 à 12, dans laquelle la face de la bande tissée sur laquelle on voit principalement des fils dudit deuxième ensemble de fils entre en contact avec le verre chaud.
